# EUROPEAN PATENT SPECIFICATION

(11) **EP 3 861 298 B1**
(45) Date of publication and mention of the grant of the patent: **05.10.2022**
(21) Application number: 18814681.5
(22) Date of filing: 31.10.2018
(51) Int. Cl.: G01F 11/20, G01F 11/24

(54) **DOSING APPARATUS**
DOSIERVORRICHTUNG
APPAREIL DE DOSAGE

(43) Date of publication of application: 11.08.2021
(73) Proprietor: Uab "Gramido", 03228 Vilnius (LT)
(72) Inventor: SHUTOV, Vasilii Vasilievich, Saint Petersburg 192239 (RU)
(74) Representative: Pranevicius, Gediminas
(86) International application number: PCT/IB2018/058524
(87) International publication number: WO 2020/089676

(56) References cited:
- EP-A1- 2 067 421
- EP-B1- 2 067 421
- WO-A1-2013/062443
- WO-A2-2015/097563
- FR-A- 1 431 228
- US-A1- 2010 264 170
- US-A1- 2018 022 362

## Description

### FIELD OF THE INVENTION

This invention relates to dosing devices for continuous, uniform dosing of pulverous, poor-flowing solid materials prone to caking, adhesion, cohesion, arching and to the gravitational pseudo-fluidization while filling the hopper, arch demolition and channeling during the hopper unloading.

### BACKGROUND OF THE INVENTION

Free-flowing pulverous solid materials are sufficiently rare, most of pulverous solid materials prone to caking, adhesion, arching and to the gravitational pseudo-fluidization while hopper filling, arch demolition and channeling during hopper unloading. Many of technical solutions were proposed to ensure continuous and uniform dosing.

Uniform dosing of pulverous poor-flowing solid materials requires solving of technological and engineering problems to ensure forced uniform and continuous powder flow from feed hoppers through the dosing ports, sustaining uniform powder density the dosing apparatus, elimination of the filling level influence, overcoming adhesion poor flowing pulverous solid materials with the surface of the hopper of the dosing apparatus, while reloading and eliminating of the regulated powder flow through the dosing apparatus as a result of pseudo-fluidization caused by the hopper filling, arch demolition and etc.

There is a known device for the volumetric dosing of powders [1, 2]. The device contains a hopper, an intake-dosing element in the form of a disc with dividing boxes and for the purpose of the powder transit facilitation down to the dividing boxes in the hopper, there is a rigidly fixed, top-end-up cone on the disc; there are fixed elements on the cone for the powder agitation in the hopper, there is, as well, at least one outlet port, located under the intake-dosing element, fixed with the capability to roll around its own axis while the cone is turning and vibrating alongside with the disc and dividing boxes, located on the disc periphery. The intake - dosing element is fixed on the bottom of the hopper with the capability for the torsional oscillations around the axis of its rotation, this element is furnished with a unit that provides rotation and torsional oscillations, whereby the outlet port is fixed in the bottom of the hopper.

The drawbacks of the known device are: irregular selection of the powder on the outlet port section of the hopper performed by the intake-dosing element. This selection is executed on the exit of the dividing box from under the head cover of the outlet unit; a filled box goes through the full circle to the entering under the unloading peak, whereby while transiting in the dividing box the powder becomes firm due to being subjected to the pressure of the highly located layers of the powder, and the efflux of the powder from the hopper is executed only in the peak's area; for the purpose of facilitating of the powder transit (pouring down) in the hopper to the dividing boxes, there is a provided cone with the agitating elements, this leads to the amplification of the construction, energy expenses for the agitation. For the liquidation of the powder firming consequences in the dividing boxes there is a provided rotary drill, that has a torsional oscillations on the intake-dosing element movement, there is a gas supply for the powder blowing-out from the dividing boxes or the pumping out for the exhaustion of the powder from the boxes, that leads to the substantial amplification of the device, increased energy expense for the powder agitation, increase of its fluidity, and, as a consequence, to the decrease of the dosing precision.

There is a known device for the powder dosing [3], that contains a hopper, an intake-dosing element in the form of a disk with a crescent filling zone and a metering port in the bottom of the disc, there is an adjoining channel to that disc, that forms the powder flow, there are adjoining helical blades, as well, for the purpose of the powder transportation from the exit of the channel till the discharge port in the center of the hopper, wherein the intake-dosing port forms the flow of the material, that is separated by the helical transporting blades into three flows, and the excessive powder goes to the top of the disc on the inclined plane, producing the additional resistance to the rotation on the drive shaft. There is moving core ripper fixed above the intake-dosing element and between them, there is a ring with a non-rotatable cores to prevent the rotation of the powder with an intake-dosing disc, fixed on the body of the hopper.

The drawbacks of the known device are: first, the complexity of ripping system of the compressed material that leads to the excessive loss in power for the ripping; second, irregular selection of the powder on the section of the hopper outlet port, performed by the intake-dosing element, the regular selection of the powder while rotated disc element moving with a port in a crescent zone takes place only in a ring module alongside the borders of the hopper and a crescent area, and out of this area some conditions arise for the powder inclined to the accretion to the powder accretion to the hopper walls and to the upper surface of the intake-dosing element disc.

The closest to the stated decision is the device for the dusty hard powders dosing [4,5], that consists of a tubular hopper, inside which there is a rotatable conical dosing element with a half-round pouring dosing port located on the periphery by the cone basis and the transporting blade under the cone basis. This blade leans upon the annular diaphragm under which there is a discharge sleeve and the conical dosing element is placed with its conical peak up and connected with the output shaft of a drive, that consists of a reduction gear and an electric engine.

The drawbacks of the known device are: first, irregular powder selection on the section of the hopper outlet port, while movement of a rotating conical dosing element with a port by the hopper basis there is a provided regular powder selection, that takes place only in the ring module by the hopper basis alongside the borders of the hopper-hopper basis, and outside this area there are conditions for the powder accretion to the hopper borders and to the surface of the intake-dosing element core, that arise for the powders inclined to the autohesion and the adhesion. These conditions arise These conditions arise to the arching above the exhaust tube of the hopper. Second, the chance of the uncontrolled carrying of the powder through the batching bin while gravitative pseudo-fluidization, generated by the hopper filling by the powder and the arches failure, that leads to the reduction of the uniformity of the powder dosing.

A powder dosing device, which has most of the common characteristics with the present invention is disclosed in [6].

### SUMMARY OF THE INVENTION

Objects of the present invention are: increasing the accuracy of dosing, providing the uniform taking and delivering of the powder from the output section of the hopper to the input dosing ports of the intake-dosing element and providing of the uniform powder transporting from the input dosing ports to the overflowing diaphragm port and from the overflowing diaphragm port to the input port of the dosing apparatus.

For tackling the mentioned problem, there is a rotating intake-dosing element connected with the shaft of driving motor inside the hopper. This element has pouring ports on its basis and transporting blades under the base, diaphragm with a pouring port in the center and the supporting plate, with at least one port for powder discharge. In addition to this, there is a block of transporting blades, connected with a driving shaft under the diaphragm on the supporting blade, with a port for powder discharge. The intake-dosing element has a form of conoid with a curvilinear generatrix, received by the rotation around vertical axis of the cycloid segment in the range of angles of inclination of tangent from 80 degrees at the upper base till the angle of inclination of tangent at the lower cone base, that equals to the angle of the external powder friction in motion, that varies from 45 degrees to 15 degrees for different powders. The cycloid that is the brachistochrone, provides minimum resistance for powder slipping from the upper conoid base to its lower base.

In the upper part of the intake-dosing element, there is a wedged ripper passing to the intake- transporting blades, that highly increase from cone top to its base. Each blade's generatrix has a form of the Archimedes' spiral projected on the cone surface perpendicular to the base, and blades turned in the direction opposite to the one of rotation of the intake-dosing element in the angle range from 0 degree to 180 degrees. The rotation of the wedged ripper leads to the destruction of the arch top and disaggregation of powder prone to autohesion and arching, while the blades on the cone surface provide uniform powder tilling through all the hopper section and radial powder transportation to the dosing ports, at that lower blade's port adjoins to the top of the dosing port, and to the bottom of closing port adjoins external end of the transporting blade, located on the lower cone base and intended for the continuous powder displacement from the input dosing ports at the cone bottom to the pouring port in the center of the diaphragm. The generatrix of the transporting blade also has a form of the Archimedes' spiral turned in the direction that is coincide the with the direction of the rotation of the intake-dosing element in the angle range from 0 degree to 180 degrees, and its inner end adjoins to the hub, on which the transporting blades are fixed. Above this, there is the port for driving shaft fixation on the hub. Under the diaphragm there are transporting blades for the material displacement from the pouring port in the center of the diaphragm to the outlet port of the dosing apparatus in the supporting plate. The generatrix of the transporting blades has the form of the Archimedes' spiral turned in the direction opposite to the direction of rotation of the intake-dosing element in the angle range from 0 degree to 180 degrees. The blades, created in the form of the Archimedes' spiral, provide while rotating powder displacement in the radial direction with a constant linear speed that provides the uniformity of powder dosing over the time.

Essence of the invention is in the following things:
Increase in the uniformity of feed of powder from all cross-sectional area of the hopper to its outlet section and to input ports of the intake-dosing element provided by the presence of the wedged ripper on the top of the cone of the intake-dosing element. The wedged ripper prevents arching and presence of the intake-transporting blades in the form of the Archimedes' spiral provides uniform powder transportation in radial direction, demolition of cakes of powder, uniform powder intake from all the cross-sectional area of the hopper and uniform powder feed to the dosing ports at the cone base. Radial powder displacement from the dosing ports to the pouring port of the diaphragm to the outlet ports of the supporting blade also provided by the presence of transporting blades, that have a generatrix in the form of the Archimedes' spiral, that exclude powder overflowing in hence of its pseudo-fluidization that takes place during the arch demolition while primary filling the hopper of the dosing apparatus by the powder. Self-cleaning of the working surfaces of blades which have a form of the Archimedes' spiral provided by the powder slicking along the working surface during the radial powder transportation.

The number of the dosing ports and the intake-dosing blades on the cone surface and the transporting blades on the lower base of the cone are equal and always is bigger or equals to 1, moreover, the higher the demands for the dosing uniformity per time unit are , the more this number is. For the most of materials, this number is in the range from 1 to 6 and the number of transporting block blades must be equal to the number of the dosing ports or more. For the most of materials, this number varies from 1 to 12.

### BRIEF DESCRIPTION OF FIGURES

Fig.1 - spaced perspective view of the component parts of the powder batcher.
Fig.2 - intake-dosing element.
Fig.3 - transporting blades block.
Fig.4 - photo of the powder dosing apparatus with a control board.
Fig.5 - photo of the sequence of the hopper dosing apparatus discharging stages.

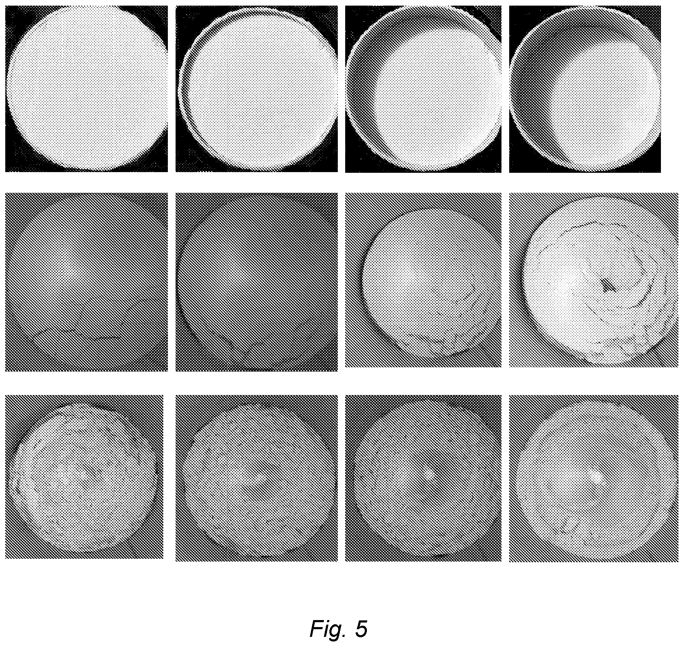

Discharging process of the hopper consists of three stages. At first stage, represented in the upper raw Fig.5 from left to right, four frames of the equable decrease on level of the granular material while the hopper is being discharged are shown. At the second stage, represented in the middle raw Fig.5 from left to right, four frames of cracking and arch apix failure are shown. At the third stage, represented in the lower raw Fig.5 from left to right, four frames of large chunks of material destruction and its granulating by the moment of the full hopper discharge are shown.

### DETAILED DESCRIPTION OF THE INVENTION

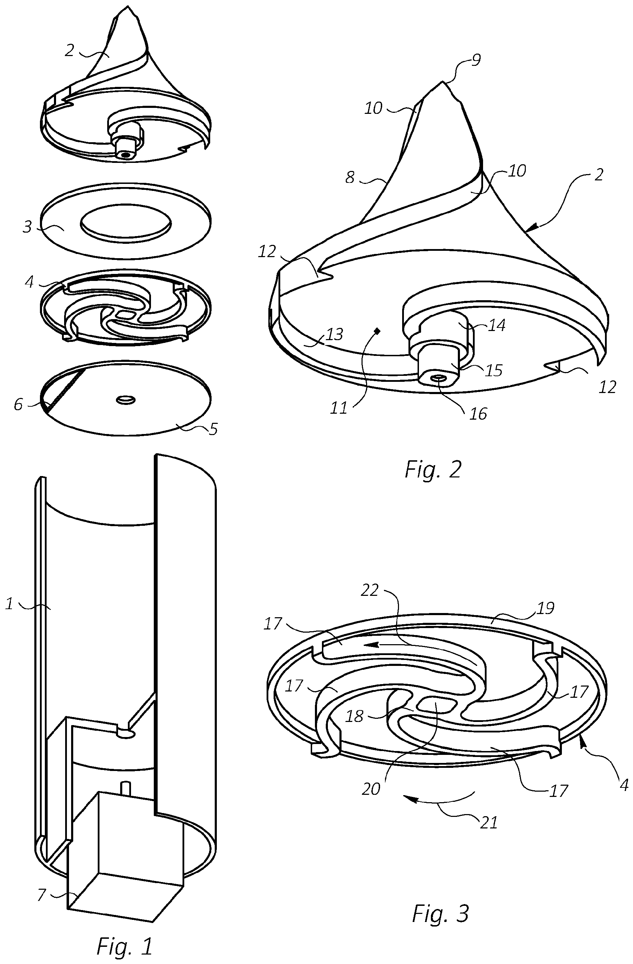

Batcher hopper 1 on the bottom of which there is a fixed intake-dosing element 2 basing by the transporting blades on the diaphragm 3 under which there is a transporting blades block 4, based on the disc 5 with a discharge port 6, fixed on the hopper bottom of a batcher 1, and below, there is a batcher driving gear 7 fixed on the bottom of the hopper, on the shaft of which there is an intake-dosing element 2 , that looks like a conoid with a curvilinear cone 8, that has a shape of a cycloid section, on the top of which there is a wedge-type ripper 9 proceeding to the intake-transporting blades 10, located on the surface of the cone and that have a shape of the Archimedes' spiral, projected to the surface of the cone perpendicular to the cone basis 11, wherein the lower part of the blade links up at its top with a dosing port 12, to the bottom of the dosing port links the outer end of the transporting blade 13 that has a shape of the Archimedes' spiral and located on the basis of the conoid 11,the inner end links up to the hub 14,on which there is a fitting crest 15 for the fixture of a transporting blades block 4, besides that there is a fitment bore in the hub 14 for the mounting of the batcher drive shaft 7; 4 consists of transporting blades 17 that have a shape of the Archimedes' spiral and hub 18 and rim 19, joint into the block. There is a fitment bore 20 for the connection with an intake-dosing element 4 in the hub. Wherein the direction of the core (runner) rotation 21 Fig.3 and the direction of the Archimedes' spiral sweep are opposite to the transporting blades block 4 and to the intake-transporting blades 10, located on the surface of the cone. And the direction of the core rotation 21 Fig.3 and the direction of the Archimedes' spiral sweep coincide with the transporting blades 13, located on the basis of the intake-dosing element cone.

### Operation of the powder dosing apparatus

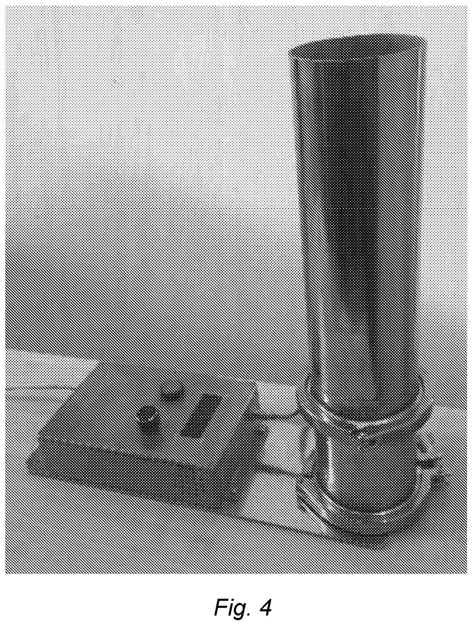

Powder from the hopper 1 under the force of the gravity comes in contact with the conical part of the rotatable intake-dosing element 2, where the wedge-type ripper 9 with the upper edge of the intake - transporting blades 10, break the consistency of the packed powder while rotating and prevent the arching, and the intake-transporting blades 10 transfer the powder layer with a disrupted structure to the dosing parts 12 through which the powder pours into the space under the intake-dosing element 2 to the diaphragm 3 and transporting blades 13, located on the basis of the cone, transport the powder along the immovable diaphragm in the radial direction from the dosing parts 12 to the pouring part in the center of the diaphragm 3, through which the powder pours into the disc 5 with the discharging part 6 on the disc periphery, transporting blades block 4 the powder moves from the pouring port in the center of the diaphragm 3 to the discharging port of the disc periphery 5, through which the powder falls into the outlet fitting of the hopper 1. The guidance of powder consumption is operated with a display unit, shown on Fig.4, by the means of changing of the frequency of dosing apparatus drive engine.

A pilot specimen, shown on Fig.4 was made for the experimental examination of the operational parameters of the suggested powder dosing apparatus construction.

The characteristics of a dosing apparatus pilot specimen: hopper diameter-100mm, hopper capacitance - 2,61; number of dosing ports on the intake-dosing element-2 pieces; number of intake blades on the intake-dosing element -2 pieces, number of transport blades on the intake-dosing element-2 pieces, number of transporting block blades- 4 pieces, frequency of the intake-dosing element rotation-from 0,3 to 100 rpm; the volumetric efficiency of the dosing apparatus from 0,225 to 75 l/h.

The wheat flour with a poured density 0,6 kg/I, with an 48 degree angle of friction slope in the quiescence, humidity of 14%, was used as a dosing material in the experiments. Flower obtains such features as: bad flowability, pelletizing ability, inclination to arching and channeling while being stored and discharged from the hoppers-that is why it was chosen as a material for the examination of the assumed dosing apparatus construction.

The photoset of discharging of the dosing apparatus hopper was made for the efficiency evaluation of the suggested construction of the intake-dosing element 2 regarding maintenance of: regular material selection on the whole cross-section of the hopper, channeling prevention ;arches destruction and granulating of the large chunks; the results of the photoset are shown on Fig.5. As a result of the photo analysis, it is stated that the process of the hopper discharging consists of three stages.

At the first stage, represented in the upper raw Fig.5 from left to right, four frames of the regular decrease in level of the granular material during the hopper discharging are shown. The level of the material in the hopper decreases to 67 %, with a permanent speed without channelling in the center of the section.

At the second stage, represented in the middle raw Fig.5 from left to right, four frames of cracking and crushing of the peak of the material arch are shown. Big cracks arise before the arch crushes while the level of the material decreases from 67% to 77%.

At the third stage, represented in the lower raw, Fig.5 from left to right, four frames of large material chunks destruction and its granulating until the moment of the full discharge of the hopper are shown. The destruction of the arch chunks while the level of the material decreases from 77% to 98%.

The efficiency evaluation of the intake-dosing element construction 2 confirms the resolution of the formulated problem in the part of the realization of the intake uniformity and powder supplying from the entire outlet section of the hopper to the intake-dosing ports of the intake-dosing element 2.

### REFERENCES

[1] Patent RU 2475709 C1, IPC G01F 13/00, 2011, C1.
[2] Patent WO 2013/062443 A1, IPC G01F 13/00, 2006, C1.
[3] Patent US 2008/0230568 A1, IPC G01F 11/20, 1988, C1.
[4] Patent US 4793525, IPC G01F 11/20, 1988, C1.
[5] Patent CH 633884A5, IPC G01F 11/34, 1982, C1.
[6] Patent EP 2 067 421 A1, 10 June 2009.

## Claims

1. A dosing apparatus for the poor-flowing pulverous solid materials, comprising a cylindrical hopper (1) with a conical intake-dosing element (2) having its top oriented upwards arranged inside the hopper, dosing ports (12) at the base of the solid cone (11) and transporting blades (13) under the base of the solid cone, connected with a shaft of a driving motor (7), a diaphragm (3) with a pouring port in the center, a transporting blade block (4) comprising transporting blades (17) and a supporting plate (5), which is provided with at least one port (6) for powder unloading, wherein:
- the transporting blades (17) which are connected with the shaft of the driving motor (7) are mounted under the diaphragm (3) on the supporting plate (5) having the port (6) for powder unloading,
- the intake-dosing element (2) of the conoid form comprises a curvilinear generatrix as a cycloid segment, having a ripper (9) on the top of the element (2) that transits to intake-transporting blades (10), their height increases from the top of the cone (2) to its base (11), the blades (10) having the form of the Archimedes' spiral and projected on the surface of the cone (2) perpendicular to the cone base (11) with the lower blades part adjoining from the above the dosing port (12),
- the working surface of the transporting blades (13) has a form of the Archimedes' spiral, located on the lower cone base (11) with its external end adjoining the dosing port (12) from the bottom and its internal end adjoining a hub (14) having a crest (15) for the fixation of the transporting blades block (4), and a port (16) for fixing the shaft of the driving motor (7) of the dosing apparatus.

2. The dosing apparatus according to claim 1, **characterized in that** the cone (2) of the intake-dosing element has the - curvilinear generatrix in the form of the cycloid segment in the range of angles of tangent from 90 degrees to the angle of the external powder friction with a surface of the cone in motion, said angle varying from 45 degrees to 15 degrees.

3. The dosing apparatus according to claim 1, **characterized in that** the working surface of the intake-transporting blades (10) on the surface of the curvilinear cone (2) of the intake-dosing apparatus has the form of the Archimedes' spiral and is directed for the material transfer from the axis of the rotation to the periphery.

4. The dosing apparatus according to claim 1, **characterized in that** the working surface of the transporting blades (13) on the surface of the base (11) of the intake-dosing element has the form of the Archimedes' spiral and is directed for the material transfer from periphery to the axis of rotation.

5. The dosing apparatus according to claim 1, **characterized in that** the working surface of the transporting blades (17) has the form of the Archimedes' spiral and is directed for the material transfer from the axis of rotation to the periphery.

6. The dosing apparatus according to claim 1, **characterized in that** the number of the dosing ports (12) and intake-transporting blades (10) on the surface of the cone (2) and the number of transporting blades (13) on the lower base (11) of the cone (2) is always the same and is always greater or equal to 1.

7. The dosing apparatus according to claim 1, **characterized in that** the number of the dosing ports (12) and intake-transporting blades (10) on the surface of the cone (2) and the number of transporting blades (13) on the lower base (11) of the cone (2) is always the same and varies in the range from 1 to 6.

8. The dosing apparatus according to claim 1, **characterized in that** the number of blades (17) in the transporting blades block (4) is equal or greater than number of the dosing ports (12) and varies in the range from 1 to 12.

## Patentansprüche

1. Dosiervorrichtung für schwerfließende pulverförmige Feststoffe, umfassend einen zylindrischen Trichter (1) mit einem konischen Zufuhr-Dosierelement (2), dessen Oberseite innerhalb des Trichters nach oben gerichtet angeordnet ist, Dosieröffnungen (12) an der Basis des festen Kegels (11) und Transportschaufeln (13) unter der Basis des festen Kegels, die mit einer Welle eines Antriebsmotors (7) verbunden sind, einer Membran (3) mit einer Ausgießöffnung in der Mitte, einem Transportschaufel-Block (4), der Transportschaufeln (17) und eine Trägerplatte (5) umfasst, die mit mindestens einer Öffnung (6) zum Entladen von Pulver versehen ist, wobei:
- die Transportschaufeln (17), die mit der Welle des Antriebsmotors (7) verbunden sind, unter der Membran (3) auf der Trägerplatte (5) mit der Öffnung (6) zum Entladen von Pulver montiert sind,
- das Zufuhr-Dosierelement (2) in Kegelform eine gekrümmte Mantellinie als Zykloidensegment umfasst, mit einem Aufreißer (9) an der Oberseite des Elements (2), der zu den Zufuhr-Transportschaufeln (10) übergeht, wobei deren Höhe von der Oberseite des Kegels (2) bis zu seiner Basis (11) zunimmt, wobei die Schaufeln (10) die Form der archimedischen Spirale aufweisen und senkrecht zur Kegelbasis (11) auf der Oberfläche des Kegels (2) hervorstehen, wobei der untere Teil der Schaufeln von oben an die Dosieröffnung (12) angrenzt,
- die Arbeitsfläche der Transportschaufeln (13) eine Form der archimedischen Spirale aufweist, die an der unteren Kegelbasis (11) angeordnet ist, wobei ihr äußeres Ende an die Dosieröffnung (12) von unten angrenzt und ihr inneres Ende an eine Nabe (14) angrenzt, die einen Kranz (15) zur Befestigung des Transportschaufel-Blocks (4) und eine Öffnung (16) zur Befestigung der Welle des Antriebsmotors (7) der Dosiervorrichtung aufweist.

2. Dosiervorrichtung nach Anspruch 1, **dadurch gekennzeichnet, dass** der Kegel (2) des Zufuhr-Dosierelements die gekrümmte Mantellinie in Form des Zykloidensegments im Bereich von Tangentenwinkeln von 90 Grad bis zum Winkel der äußeren Pulverreibung mit einer Oberfläche des in Bewegung befindlichen Kegels aufweist, wobei der Winkel von 45 Grad bis 15 Grad variiert.

3. Dosiervorrichtung nach Anspruch 1, **dadurch gekennzeichnet, dass** die Arbeitsfläche der Zufuhr-Transportschaufeln (10) auf der Oberfläche des gekrümmten Kegels (2) der Zufuhr-Dosiervorrichtung die Form der archimedischen Spirale aufweist und für den Materialtransfer von der Rotationsachse zur Peripherie gerichtet ist.

4. Dosiervorrichtung nach Anspruch 1, **dadurch gekennzeichnet, dass** die Arbeitsfläche der Transportschaufeln (13) auf der Oberfläche der Basis (11) des Zufuhr-Dosierelements die Form der archimedischen Spirale aufweist und für den Materialtransfer von der Peripherie zur Rotationsachse gerichtet ist.

5. Dosiervorrichtung nach Anspruch 1, **dadurch gekennzeichnet, dass** die Arbeitsfläche der Transportschaufeln (17) die Form der archimedischen Spirale aufweist und für den Materialtransfer von der Rotationsachse zur Peripherie gerichtet ist.

6. Dosiervorrichtung nach Anspruch 1, **dadurch gekennzeichnet, dass** die Anzahl der Dosieröffnungen (12) und der Zufuhr-Transportschaufeln (10) auf der Oberfläche des Kegels (2) und die Anzahl der Transportschaufeln (13) an der unteren Basis (11) des Kegels (2) immer die gleiche ist und immer größer gleich 1 ist.

7. Dosiervorrichtung nach Anspruch 1, **dadurch gekennzeichnet, dass** die Anzahl der Dosieröffnungen (12) und Zufuhr-Transportschaufeln (10) auf der Oberfläche des Kegels (2) und die Anzahl der Transportschaufeln (13) an der unteren Basis (11) des Kegels (2) immer die gleiche ist und im Bereich von 1 bis 6 variiert.

8. Dosiervorrichtung nach Anspruch 1, **dadurch gekennzeichnet, dass** die Anzahl der Schaufeln (17) in dem Transportschaufel-Block (4) größer gleich der Anzahl der Dosieröffnungen (12) ist und im Bereich von 1 bis 12 variiert.

## Revendications

1. Appareil de dosage pour matières solides pulvérulentes à écoulement difficile, comprenant une trémie cylindrique (1) avec un élément de dosage d'entrée (2) conique dont le dessus est orienté vers le haut disposé dans la trémie, des orifices de dosage (12) à la base du cône solide (11) et des lames de transport (13) sous la base du cône solide, reliées à un arbre d'un moteur d'entraînement (7), une membrane (3) avec un orifice de versement au centre, un bloc de lames de transport (4) comprenant des lames de transport (17) et une plaque de support (5), laquelle est dotée d'au moins un orifice (6) pour le déchargement de poudre, dans lequel :
- les lames de transport (17) reliées à l'arbre du moteur d'entraînement (7) sont montées sous la membrane (3) sur la plaque de support (5) comportant l'orifice (6) pour le déchargement de poudre,
- l'élément de dosage d'entrée (2) de la forme conoïde comprend une génératrice curvilinéaire sous la forme d'un segment cycloïde, présentant un extracteur (9) sur le dessus de l'élément (2) transitant vers des lames de transport d'entrée (10) dont la hauteur augmente à partir du haut du cône (2) vers sa base (11), les lames (10) présentant la forme d'une spirale d'Archimède et se projetant sur la surface du cône (2) perpendiculairement à la base de cône (11) avec la partie de lames inférieure adjacente depuis le haut de l'orifice de dosage (12),
- la surface de travail des lames de transport (13) présente la forme d'une spirale d'Archimède située sur la base de cône inférieure (11) avec son extrémité externe adjacente à l'orifice de dosage (12) depuis le bas et son extrémité interne adjacente à un moyeu (14) comportant une crête (15) pour la fixation du bloc de lames de transport (4), et un orifice (16) pour la fixation de l'arbre du moteur d'entraînement (7) de l'appareil de dosage.

2. Appareil de dosage selon la revendication 1, **caractérisé en ce que** le cône (2) de l'élément de dosage d'entrée présente la génératrice curvilinéaire sous la forme du segment cycloïde dans la plage angulaire de tangente de 90 degrés par rapport à l'angle de la friction de poudre externe avec une surface du cône en mouvement, ledit angle variant de 45 degrés à 15 degrés.

3. Appareil de dosage selon la revendication 1, **caractérisé en ce que** la surface de travail des lames de transport d'entrée (10) sur la surface du cône curvilinéaire (2) de l'appareil de dosage d'entrée présente la forme d'une spirale d'Archimède et est conçue pour le transfert de matière à partir de l'axe de rotation vers la périphérie.

4. Appareil de dosage selon la revendication 1, **caractérisé en ce que** la surface de travail des lames de transport (13) sur la surface de la base (11) de l'élément de dosage d'entrée présente la forme d'une spirale d'Archimède et est conçue pour le transfert de matière à partir de la périphérie vers l'axe de rotation.

5. Appareil de dosage selon la revendication 1, **caractérisé en ce que** la surface de travail des lames de transport (17) présente la forme d'une spirale d'Archimède et est conçue pour le transfert de matière à partir de l'axe de rotation vers la périphérie.

6. Appareil de dosage selon la revendication 1, **caractérisé en ce que** le nombre d'orifices de dosage (12) et de lames de transport d'entrée (10) sur la surface du cône (2) et le nombre de lames de transport (13) sur la base inférieure (11) du cône (2) sont toujours les mêmes et sont toujours supérieurs ou égaux à 1.

7. Appareil de dosage selon la revendication 1, **caractérisé en ce que** le nombre d'orifices de dosage (12) et de lames de transport d'entrée (10) sur la surface du cône (2) et le nombre de lames de transport (13) sur la base inférieure (11) du cône (2) sont toujours les mêmes et varient dans la plage de 1 à 6.

8. Appareil de dosage selon la revendication 1, **caractérisé en ce que** le nombre de lames (17) dans le bloc de lames de transport (4) est égal ou supérieur au nombre d'orifices de dosage (12) et varie dans la plage de 1 à 12.
